# EUROPÄISCHE PATENTSCHRIFT

(11) **EP 1 063 184 B1**
(45) Veröffentlichungstag und Bekanntmachung des Hinweises auf die Patenterteilung: **05.11.2003**
(21) Anmeldenummer: 99810548.0
(22) Anmeldetag: 21.06.1999
(51) Int. Cl.: B65G 47/51

(54) **Anordnung zum Zwischenlagern von Paketen**
Device for temporary storing of packages
Dispositif pour l'entreposage temporaire de paquets

(43) Veröffentlichungstag der Anmeldung: 27.12.2000
(73) Patentinhaber: GRAPHA-HOLDING AG, 6052 Hergiswil (CH)
(72) Erfinder: Linder, Heinz, 4800 Zofingen (CH)

(56) Entgegenhaltungen:
- EP-A- 0 486 360
- DE-A- 3 040 966
- GB-A- 1 384 593
- US-A- 5 301 790

## Beschreibung

Die Erfindung betrifft eine Anordnung zum Zwischenlagern von Paketen, mit einer Transportstrecke zum Transportieren von Paketen von einer Beladestation zu einer Verladestation. Die Erfindung betrifft zudem ein Verfahren zum Zwischenlagern von Paketen, mit einer Transportstreckte, mit der Pakete von einer Beladestation zu einer Verladestation transportiert werden.

Bei Versandanlagen für Zeitungen besteht oft die Notwendigkeit, die zu Paketen gesammelten Zeitungen zwischenzulagern. Dies ist dann beispielsweise erforderlich, wenn Störungen in der Zeitungsproduktion auftreten oder die zu beladenden Fahrzeuge nicht vorhanden sind. Eine solche Zwischenlagerung kann aber auch geplant sein.

Bisher wurden Pakete, die zwischengelagert werden sollen, von Hand abgestappelt und auf Paletten abgelegt. Von diesen Paletten wurden die Pakete dann wiederum von Hand auf Beladebänder oder direkt in die Fahrzeuge verladen. Da bei leistungsfähigen Anlagen in kurzer Zeit sehr viele Pakete anfallen, kann dieses Laden und Entladen von Paletten sehr personalaufwendig sein.

Eine bekannte Vorrichtung gemäss der DE 30 40 966 A zum zeitweiligen Sammeln und Lagern von Materialien auf Schalen, vermittelt einen Zuführungsförderer zum Transport von Geschirr zu einer Geschirrspülmaschine, wobei dem Zuführungsförderer ein Pufferlager zur Aufnahme von Geschirr zugeschaltet ist. Letzteres wird auf höhenverstellbaren Regalen dem Pufferlager zugeführt und auf dem gleichen Weg zurück ausgelagert.

Der Erfindung liegt die Aufgabe zugrunde, eine Anordnung der genannten Art zu schaffen, die ein einfaches und kostengünstiges Zwischenlagern ermöglicht.

Diese Aufgabe wird durch eine Anordnung gemäß Anspruch 1 gelöst, wobei zum Zwischenlagern wenigstens eine weitere Transportstrecke vorgesehen ist und diese eine Lagerfläche aufweist, die mittels eines Förderers in Transportrichtung mit Paketen beladbar und entladbar ist. Zum Zwischenlagern werden somit Pakete auf eine weitere Transportstrecke gebracht. Diese besitzt eine Lagerfläche sowie einen Förderer, mit dem die Lagerfläche in Transportrichtung beladen und entladen wird. Das Beladen und Entladen der Lagerfläche kann mittels des Förderers automatisch und auch programmgesteuert erfolgen.

Vorzugsweise sind mehrere Lagerflächen vorgesehen, die mit einem oder mehreren Förderern bedienbar sind. Besonders viele Pakete können zwischengelagert werden, wenn mehrere Lagerflächen vorgesehen sind, die vom Förderer wegbewegt werden können. Ist eine Lagerfläche mit Paketen beladen, so wird diese vom Förderer wegbewegt und eine weitere Lagerfläche wird mit diesem Förderer beladen. Die Lagerfläche ist vorzugsweise so ausgebildet, dass auf ihr die Pakete in einer Reihe möglichst lückenlos hintereinander gelagert werden können. Dies ermöglicht, die Pakete routengerecht oder beladegerecht in Reihen zwischenzulagern. Eine Lagerfläche nimmt dann beispielsweise sämtliche Pakete auf, die für die Verkaufsstellen eines bestimmten Bereiches vorgesehen sind. Eine weitere Lagerfläche nimmt dann die Pakete eines weiteren Bereiches auf. Beim Beladen der Fahrzeuge bleibt diese Ordnung erhalten.

Nach einer bevorzugten Weiterbildung sind mehrere Ladeflächen zu einer Einheit, beispielsweise einem Kasten zusammengefasst. Diese Einheit kann dann nach dem Beladen vom Förderer wegbewegt werden. Denkbar ist auch eine Ausführung, bei welcher die Einheit fest angeordnet und der Förderer bewegt wird.

Die weitere Förderstrecke ist vorzugsweise linear ausgebildet und weist einen Eingang auf, der nahe der Beladestation angeordnet ist. Ein Ausgang dieser weiteren Transportstrecke ist im Bereich der Verladestation angeordnet. Der Förderer bzw. die Lagerfläche kann dann quer zur Transportrichtung verschoben werden. Es lassen sich dann platzsparend mehrere parallel zueinander verlaufende Lagerflächen anordnen. Die Einheiten mit diesen Lagerflächen können beispielsweise an Schienen beweglich gelagert sein.

Das erfindungsgemässe Verfahren nach Anspruch 11 sieht vor, dass Pakete zum Zwischenlagern in einer Reihe zu einer weiteren wenigstens eine Lagerfläche aufweisenden Transportstrecke transportiert werden und diese Pakete zum Verladen von dieser weiteren Transportstrecke wegtransportiert werden. Besonders viel Lagerraum steht dann zur Verfügung, wenn nach einer Weiterbildung des Verfahrens die Pakete beim Zwischenlagern verdichtet werden. Das Verdichten erfolgt vorzugsweise durch sequentielles Transportieren und Warten. Die zwischenlagernden Pakete sind dann im wesentlichen lückenlos in einer Reihe angeordnet. Vorzugsweise werden mehrere solche Reihen parallel und nebeneinander angeordnet.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: schematisch eine Draufsicht auf eine erfindungsgemässe Anordnung,
- Fig. 2: schematisch ein Schnitt entlang der Linie II-II in Figur 1,
- Fig. 3: schematisch eine Ansicht einer weiteren Transportstrecke,
- Fig. 4: die Transportstrecke gemäss Figur 3, wobei Pakete eingelagert sind,
- Fig. 5: schematisch eine Ansicht eines Teils der Anlage und
- Fig. 6: eine Draufsicht auf den Teil gemäss Figur 5.

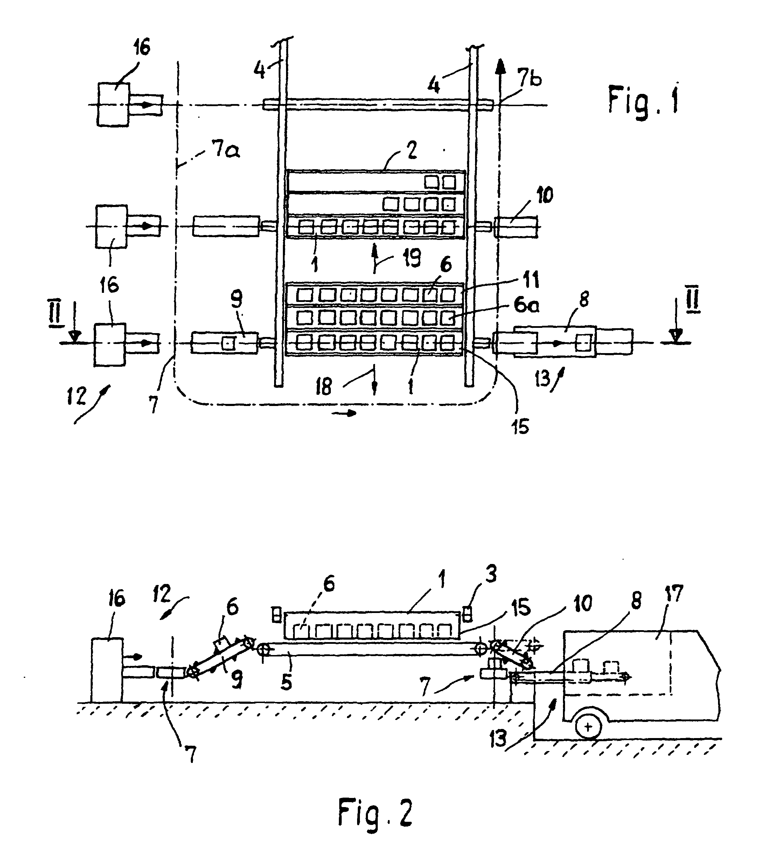

Die Anlage weist gemäss den Figuren 1 und 2 ein Transportband 7 auf, mit dem Pakete 6 direkt von einer Beladestation 12 zu einer Verladestation 13 transportiert werden können. In einem Bereich 7a werden die Pakete 6 von der Beladestation 12 aufgenommen und an einem dazu im wesentlichen parallelen Bereich 7b werden die Pakete 6 an die Verladestation 13 übergeben.

Die Beladestation 12 weist beispielsweise mehrere nebeneinander angeordnete Stapler 16 auf, in welchen die beispielsweise von einer hier nicht gezeigten Rotation kommenden Zeitungen zu Paketen 6 gestapelt werden. Die Stapel 16 sind beispielsweise bekannte Kreuzleger und die Pakete werden beispielsweise in Folien verpackt.
Die Verladestelle 13 weist wenigstens ein Ladeband 8 auf, das die Pakete 6 vom Transportband 7 zu einem Fahrzeug 17 fördert. Ist ein Fahrzeug 17 nicht vorhanden, so können die Pakete 6 selbstverständlich nicht verladen werden. Damit die Zeitungen weiter gedruckt und zu Paketen 6 gestapelt werden können, werden die Pakete 6 wie nachfolgend erläutert zwischengelagert.

Zwischen der Beladestation 12 und der Verladestation 13 ist wenigstens ein weiterer Förderer 5, beispielsweise ein Förderband angeordnet, das eine weitere Transportstrecke bildet. Wie die Figur 2 zeigt, befindet sich der Förderer 5 etwas über der Ebene des Transportbandes 7. Mit dem Förderer 5 können Pakete 6 in Figur 1 und 2 von links nach rechts und somit von der Beladestation 12 zur Verladestation 13 transportiert werden. Der Transport der Pakete 6 von der Beladestation 12 zum Förderer 5 erfolgt gemäss Figur 2 mit einem ansteigenden Förderband 9 oder einer anderen geeigneten Fördervorrichtung. Der Transport der Pakete vom Förderer 5 zum Ladeband 8 erfolgt mit einem schwenkbaren Band 10 oder einer anderen geeigneten Fördervorrichtung. In der in Figur 2 gestrichelt gezeigten horizontalen Ausrichtung steht das Ladeband 8 still. Gefördert wird bei dieser Vorrichtung direkt mit dem Transportband 7. Um Pakete 6 vom Förderer 5 auf das Ladeband 8 zu transportieren, ist das Band 10 geneigt ausgerichtet, wie dies in Figur 2 mit ausgezogenen Linien gezeigt ist.

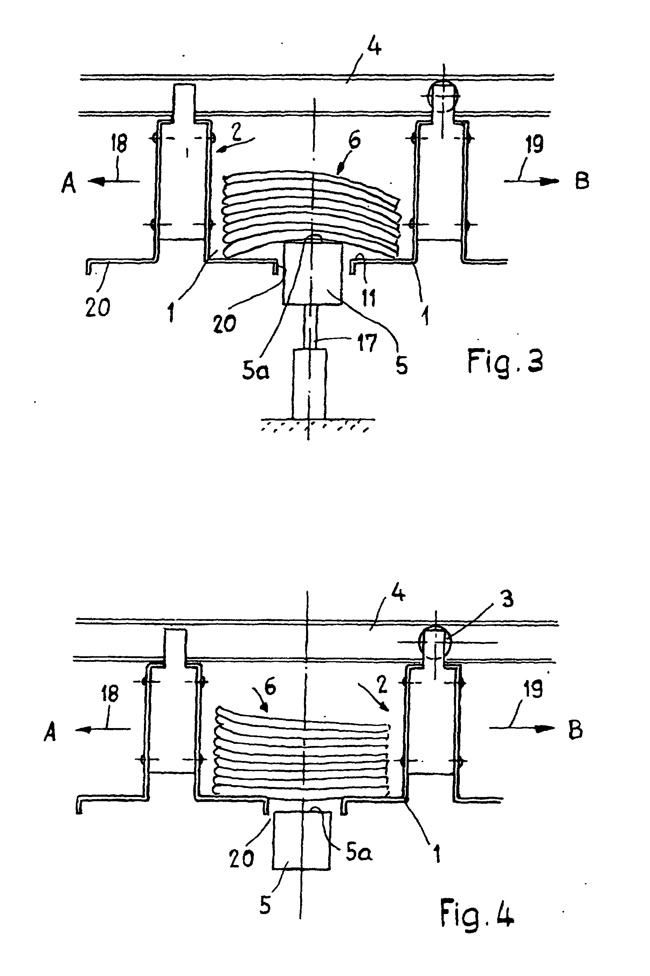

Über dem Förderer 5 sind an parallelen Laufschienen 4 zwei kastenförmige Einheiten 2 gelagert, die mit einem hier nicht gezeigten Antrieb in Richtung der Pfeile 18 und 19 quer zur Förderrichtung des Förderers 5 verfahrbar sind. Die Lagerung erfolgt beispielsweise mit Laufrollen 3, die seitlich an den kastenförmigen Einheiten 2 angebracht sind. Jede Einheit 2 weist vorzugsweise mehrere vorzugsweise gerade und steifenförmige Lagerflächen 11 auf, die jeweils in einem kanalförmigen Bereich 1 angeordnet sind. Wie die Figuren 3 und 4 zeigen, befindet sich etwa mittig in der Lagerfläche 11 jeweils ein Durchgang 20, der sich über die gesamte Länge des Bereichs 1 erstreckt. Die in Figur 1 gezeigten Einheiten 2 weisen jeweils drei solche Bereiche 1 auf. Es können jedoch auch weniger oder mehr als drei Bereiche 1 vorgesehen sein.

Der Förderer 5 ist mittels einer Hebevorrichtung 17 (Figur 3) höhenverstellbar. In der in Figur 3 gezeigten Position durchgreift der Förderer 5 den Durchgang 20, während in der unteren Position gemäss Figur 4 der Förderer 5 sich unterhalb der Einheit 2 befindet. In der Position gemäss Figur 3 befindet sich somit der Obertrum 5a über dem Durchgang 20 und bei der Position gemäss Figur 4 befindet sich der Obertrum 5a unterhalb des Durchgangs 20. Ist der Förderer 5 in der unteren Position gemäss Figur 4 so kann die Einheit 2 quer zur Förderrichtung gemäss den Pfeilen 18 und 19 nach links bzw. nach rechts verfahren werden. Bei der Position gemäss Figur 3 steht die Einheit 2 hingegen still.
Nachfolgend wird die Arbeitsweise der erfindungsgemässen Anordnung erläutert.

Ist ein Zwischenlagern nicht erforderlich, so werden die Pakete 6 mit dem Transportband 7 direkt von der Beladestation 12 zur Verladestation 13 transportiert. Ist hingegen eine Zwischenlagerung erforderlich, so werden die Pakete 6 so geleitet, dass sie auf das ansteigende Band 9 gelangen. Geeignete Leitvorrichtungen sind dem Fachmann gut bekannt. Der Förderer 5 wird mittels der Hebevorrichtung 17 in die Figur 3 gezeigte obere Stellung gebracht. Das Band 9 transportiert die Pakete 6 zu einem Eingang 14 eines kanalförmigen Bereichs 1 und auf den Förderer 5. Das Paket 6 und die nachfolgenden Pakete werden nun über der Lagerfläche 11 gegen einen Ausgang 15 gefördert. Der Förderer 5 ist vorzugsweise so gesteuert, dass die auf diesem ankommenden Pakete 6 durch sequentielles Transportieren und Warten zu einer praktisch lückenlosen Formation angeordnet werden. Befindet sich das vorderste Paket 6a (Figur 1) vor dem Ausgang 15, so wird der Förderer 5 mit der Vorrichtung 17 in die in Figur 4 gezeigte Position abgesenkt. Die zwischen dem Eingang 14 und dem Ausgang 15 befindlichen Pakete 6 werden dadurch auf die Lagerfläche 11 abgelegt. Die Einheit 2 wird nun entweder in Richtung des Pfeiles 18 Figur 3 nach links oder in Richtung des Pfeils 19 nach rechts bewegt, bis sich der Förderer 5 unterhalb eines weiteren Durchgangs 20 befindet. Der Förderer 5 ist nun zum Beladen eines weiteren kanalförmigen Bereichs 1 bereit. Ist auch dieser Bereich beladen, so wird dieser Vorgang wiederholt, bis die erforderliche Anzahl Pakete 6 zwischengelagert ist.

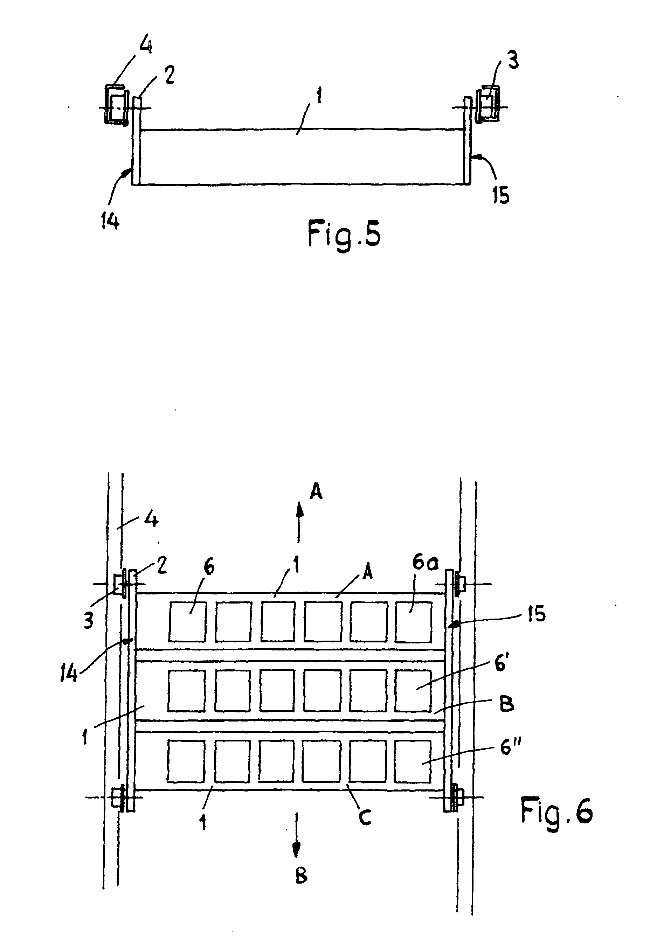

Die Figuren 5 und 6 zeigen eine Einheit 2 mit Paketen 6, 6' und 6'', die jeweils eine reihenförmige Formation A, B bzw. C bilden. Die Formationen A, B und C bilden Reihen, die vorzugsweise belade- bzw. routengerecht angeordnet sind. Die Formationen A, B und C sind somit beispielsweise für unterschiedliche Versandbereiche, beispielsweise unterschiedliche Städte bestimmt. Die Anzahl der Pakete 6, 6' und 6" kann unterschiedlich sein. Angestrebt wird jedoch, dass die Bereiche 1 vollständig und möglichst lückenlos mit Paketen belegt sind. Die Einheiten 2 werden vorzugsweise bezüglich der Transportrichtung horizontal links und rechts bewegt. Denkbar ist aber auch ein Transport in vertikaler Richtung. Denkbar ist schliesslich auch, dass die Einheiten 2 fest angeordnet und der Förderer 5 von einem Bereich 1 zu einem anderen Bereich bewegt wird. Die Einheiten 2 können zudem auch mit mehreren Förderern 5 bedient werden. Grundsätzlich kann der Förderer 5 auch ein Teilbereich des Transportbandes 7 sein.

Zum Verladen der zwischengelagerten Pakete 6, 6' und 6" wird ein kanalförmiger Bereich 1 über dem Förderer 5 so positioniert, dass dieser in die in Figur 3 gezeigte Position angehoben werden kann. Die zu verladenden Pakete 6 werden somit vom Förderer 5 erfasst und werden mit dem Förderer 5 zum Ausgang 15 und auf das Band 10 gefördert. Das Band 10 wird in die geneigte Position verschwenkt und damit die Pakete 6 vom Ausgang 15 auf eines der Ladebänder 8 transportiert. Das Ladeband 8 fördert nun die Pakete 6 zum Fahrzeug 17. Ist ein kanalförmiger Bereich 1 entladen, so wird der Förderer 5 abgesenkt und die Einheit 1 wird zum Entladen eines weiteren Bereichs 1 quer zur Förderrichtung des Förderers 5 verfahren. Das Entladen dieses weiteren Bereichs 1 erfolgt wie oben erläutert. Sind sämtliche Einheiten 2 entladen, so kann mit der Anlage wieder wahlweise direkt mit dem Transportband verladen oder über den Förderer 5 zwischengelagert werden.

## Patentansprüche

1. Anordnung zum Zwischenlagern von Paketen (6), mit einer Transportstrecke (7) zum Transportieren von Paketen (6) von einer Beladestation (12) zu einer Verladestation (13), und einer weiteren Transportstrecke (5) zum Zwischenlagern der Pakete, wobei die weitere Transportstrecke (5) wenigstens eine mit hintereinander angeordneten Paketen belad- und entladbare Lagerfläche (11) aufweist, wobei die Transportstrecke (7) derart geführt ist, daß sie zwei im Wesentlichen parallele Abschnitte (7a, 7b) aufweist, **dadurch gekennzeichnet, dass** die weitere Transportstrecke (5) sich zwischen diesen Abschnitten (7a, 7b) derart erstreckt, daß sie mit Paketen von einer der Abschnitte (7a) beladbar ist, und die Pakete am anderen Abschnitt (7b) entladen kann.

2. Anordnung nach Anspruch 1, **dadurch gekennzeichnet, dass** mehrere Lagerflächen im wesentlichen parallel nebeneinander angeordnet sind.

3. Anordnung nach einem der Ansprüche 1 und 2, **dadurch gekennzeichnet, dass** das Förderorgan (5) bzw. die Lagerfläche (11) verfahrbar ist.

4. Anordnung nach Anspruch 3, **dadurch gekennzeichnet, dass** mehrere Lagerflächen (11) zu einer Einheit zusammenfassbar sind.

5. Anordnung nach einem der Ansprüche 1 bis 4, **dadurch gekennzeichnet, dass** wenigstens eine Lagerfläche (11) einen Durchgang für ein Förderorgan (5) aufweist.

6. Anordnung nach Anspruch 5, **dadurch gekennzeichnet, dass** das Förderorgan (5) mittels einer Hebevorrichtung (17) vertikal verstellbar ist.

7. Anordnung nach einem der Ansprüche 1 bis 6, **dadurch gekennzeichnet, dass** die Beladestation (12) wenigstens einen, vorzugsweise mehrere Stacker (16) für die Aufnahme von Druckprodukten aus einer Tiefdruck-, Rollenoffset- oder Zeitungs-Rotationsdruckmaschine aufweist.

8. Anordnung nach einem der Ansprüche 1 bis 7, **dadurch gekennzeichnet, dass** sie von einer direkten Beladung von Transportfahrzeugen (17) auf eine Beladung der genannten Lagerfläche (11) bzw. den Lagerflächen (11) umstellbar ist.

9. Anordnung nach einem der Ansprüche 1 bis 8, **gekennzeichnet durch** wenigstens ein fest installiertes und höhenverstellbares Förderorgan (5) mit dem die wenigstens eine Lagerfläche (11) zum Zwischenlagern und wieder Auslagern bedienbar ist.

10. Anordnung nach Anspruch 9, **dadurch gekennzeichnet, dass** das Förderorgan (5) mit einem sich horizontal erstreckenden Obertrum (5a) ausgebildet ist.

11. Verfahren zum Zwischenlagern von Paketen (6) mit einer Transportstrecke (7), nach einem der Ansprüche 1 bis 10, mit der Pakete (6) von einer Beladestation (12) zu einer Verladestation (13) transportiert werden, **dadurch gekennzeichnet, dass** Pakete (6) zum Zwischenlagern zu einer weiteren Transportstrecke (5) transportiert werden und diese Pakete (6) zum Verladen von dieser weiteren Transportstrecke (5) wegtransportiert werden.

12. Verfahren nach Anspruch 11, **dadurch gekennzeichnet, dass** Pakete (6) zum Zwischenlagern in reihenförmigen Formationen (A, B, C) nacheinander auf die Lagerflächen (11) abgelegt werden.

13. Verfahren nach Anspruch 11 oder 12, **dadurch gekennzeichnet, dass** die Pakete (6) dicht aneinanderliegend auf die wenigstens eine Lagerfläche (11) abgelegt werden.

14. Verfahren nach Anspruch 13, **dadurch gekennzeichnet, dass** die Pakete (6) durch sequentielles Transportieren und Warten dicht aneinandergelegt werden.

15. Verfahren nach einem der Ansprüche 11 bis 14, **dadurch gekennzeichnet, dass** die Pakete (6) in einer routengerechten und wieder abrufbaren Formation (A, B, C) zwischengelagert werden.

## Claims

1. Arrangement for intermediate storage of stacks (6) with a conveying stage (7) for conveying stacks (6) from a loading station (12) to a point of dispatch (13), and a further conveying stage (5) for the intermediate storage of stacks, whereby the further conveying stage (5) has at least one storage surface (11) for loading and unloading, with stacks arranged one after another, whereby the conveying stage (7) is directed such that it has at least two essentially parallel sections (7a, 7b), and the further conveying stage (5) extends between these sections (7a, 7b) such that it can be loaded with stacks from one section (7a) and the stacks can unload on the other section (7b).

2. Arrangement in accordance with claim 1, **characterized in that** several storage surfaces are arranged essentially parallel to each other.

3. Arrangement in accordance with one of claims 1 or 2, **characterized in that** the conveying member (5) and/or the storage surface (11) can be transported.

4. Arrangement in accordance with claim 3, **characterized in that** several storage surfaces (11) can be put together to form a single unit.

5. Arrangement in accordance with one of claims 1 to 4, **characterized in that** at least one storage surface (11) has a passage for a conveying member (5).

6. Arrangement in accordance with claim 5, **characterized in that** the conveying member (5) can be vertically displaced by means of a lifting device (17).

7. Arrangement in accordance with one of claims 1 to 6, **characterized in that** the loading station (12) has at least one, preferably several stackers (16) for the uptake of printed materials from a roll-fed photogravure rotary machine, a roller offset rotary printing press or a newspaper rotary machine.

8. Arrangement in accordance with one of claims 1 to 7, **characterized in that** it can be changed over from a direct loading of transport vehicles (17) to loading of the forementioned storage surface (11) or surfaces (11).

9. Arrangement in accordance with one of claims 1 to 8, **characterized in that** at least one fixedly installed and height-adjustable conveying member (5) can be operated with the at least one storage surface (11) for intermediate storage and removal of stock from the intermediate storage point.

10. Arrangement in accordance with claim 9, **characterized in that** the conveying member (5) is developed with an upper leader (5a) that extends horizontally.

11. Process for intermediate storage of stacks (6) with a conveying stretch (7), in accordance with one of claims 1 to 10, with which stacks (6) are conveyed from a loading station (12) to a dispatch station (13), **characterized in that**, for intermediate storage, stacks (6) are conveyed to a further conveying stretch (5), and these stacks (6) are conveyed away from this further conveying stretch (5) for dispatch.

12. Process in accordance with claim 11, **characterized in that** stacks (6) are deposited, one after the other, in a serial arrangement (A, B, C) on the storage surfaces (11).

13. Process in accordance with claim 11 or 12, **characterized in that** the stacks (6) are set down lying immediately one on top of another on the at least one storage surface (11).

14. Process in accordance with claim 13, **characterized in that** the stacks (6) lie immediately on top of each other through sequential conveying and waiting.

15. Process in accordance with one of claims 11 to 14, **characterized in that** the stacks (6) undergo intermediate storage in an arrangement (A, B, C) that is suitable to the course along which they move and in which the stacks (6) can be called for.

## Revendications

1. Dispositif pour l'entreposage temporaire de paquets (6), ayant une voie de transport (7) pour le transport de paquets (6) d'une station de chargement (12) à une station de déchargement (13), et une autre voie de transport (5) pour l'entreposage temporaire des paquets, l'autre voie de transport (5) comportant au moins une surface de stockage (11) pouvant être chargée et déchargée de paquets disposés les uns derrière les autres, la voie de transport (7) étant réalisée de telle façon qu'elle comporte deux tronçons (7a, 7b) essentiellement parallèles, **caractérisé en ce que** l'autre voie de transport (5) s'étend entre ces tronçons (7a, 7b) de telle façon qu'elle peut être chargée de paquets à partir de l'un des tronçons (7a), et peut décharger les paquets à l'autre tronçon (7b).

2. Dispositif selon la revendication 1, **caractérisé en ce que** plusieurs surfaces de stockage sont disposées côte à côte essentiellement de manière parallèles.

3. Dispositif selon l'une des revendications 1 et 2, **caractérisé en ce que** l'organe de transport (5) ou la surface de stockage (11) est carrossable.

4. Dispositif selon la revendication 3, **caractérisé en ce que** plusieurs surfaces de stockage (11) peuvent être groupées en une seule unité.

5. Dispositif selon l'une quelconque des revendications 1 à 4, **caractérisé en ce que** au moins une surface de stockage (11) comporte un passage pour un organe de transport (5).

6. Dispositif selon la revendication 5, **caractérisé en ce que** l'organe de transport (5) peut être déplacé verticalement au moyen d'un mécanisme de levage (17).

7. Dispositif selon l'une quelconque des revendications 1 à 6, **caractérisé en ce que** la station de chargement (12) comporte au moins un, de préférence, plusieurs gerbeurs (16) pour réceptionner des imprimés provenant d'une machine d'héliogravure, d'une machine offset à bobines, ou d'une machine à imprimer rotative de journaux.

8. Dispositif selon l'une quelconque des revendications 1 à 7, **caractérisé en ce qu'**il peut être transformé d'un chargement direct de véhicules de transport (17) à un chargement de la surface de stockage (11) mentionnée ou des surfaces de stockage (11).

9. Dispositif selon l'une quelconque des revendications 1 à 8, **caractérisé par** au moins un organe de transport (5) solidement installé et pouvant être déplacé verticalement avec lequel la au moins une surface de stockage (11) peut être utilisée pour l'entreposage temporaire et de nouveau pour l'évacuation.

10. Dispositif selon la revendication 9, **caractérisé en ce que** l'organe de transport (5) est formé avec un brin supérieur (5a) s'étendant horizontalement.

11. Procédé pour l'entreposage temporaire de paquets (6) avec une voie de transport (7), selon l'une quelconque des revendications 1 à 10, avec lequel des paquets (6) sont transportés d'une station de chargement (12) à une station de déchargement (13), **caractérisé en ce que** des paquets (6) destinés à l'entreposage temporaire sont transportés vers une autre voie de transport (5) et ces paquets (6) sont transportés par cette autre voie de transport (5) pour le déchargement.

12. Procédé selon la revendication 11, **caractérisé en ce que** des paquets (6), pour l'entreposage temporaire sont déposés en formations (A, B, C) du type rangées, les uns derrière les autres sur les surfaces de stockage (11).

13. Procédé selon la revendication 11 ou 12, **caractérisé en ce que** les paquets (6) sont rangés serrés les uns contre les autres sur la au moins une surface de stockage (11).

14. Procédé selon la revendication 13, **caractérisé en ce que** les paquets (6) sont rangés serrés les uns des autres par transport séquentiel et attente.

15. Procédé selon l'une quelconque des revendications 11 à 14, **caractérisé en ce que** les paquets (6) sont entreposés temporairement en une formation (A, B, C) satisfaisant au transport et pouvant être de nouveau retirée.
